# NOUVEAU FASCICULE DE BREVET EUROPEEN

(11) **EP 0 963 462 B2**
(45) Date de publication et mention de la décision concernant l'opposition: **11.01.2006**
(45) Mention de la délivrance du brevet: 04.10.2001
(21) Numéro de dépôt: 98913837.5
(22) Date de dépôt: 05.03.1998
(51) Int. Cl.: C25D 11/02, D01F 11/16

(54) **PROCEDE DE REALISATION PAR VOIE ELECTROCHIMIQUE D'UN MATERIAU CARBONE DONT LA SURFACE EST MODIFIEE PAR DES GROUPES FONCTIONNALISES, NOUVEAU MATERIAU CARBONE MODIFIE EN SURFACE ET APPLICATION DE CE MATERIAU**
VERFAHREN ZUR ELEKTROCHEMISCHEN HERSTELLUNG VON KOHLENSTOFFMATERIAL, DESSEN OBERFLÄCHE MIT FUNKTIONELLEN GRUPPEN MODIFIZIERT IST, MODIFIZIERTES NEUES KOHLENSTOFFMATERIAL UND OBERFLÄCHE UND ANWENDUNG DIESES MATERIALS
METHOD FOR ELECTROCHEMICALLY PRODUCING CARBON MATERIAL WITH ITS SURFACE MODIFIED BY FUNCTIONALISED GROUPS, NOVEL CARBON MATERIAL WITH MODIFIED SURFACE AND ITS APPLICATION

(30) Priorité: 07.03.1997 FR 9702738
(43) Date de publication de la demande: 15.12.1999
(73) Titulaire: CENTRE NATIONAL DE LA RECHERCHE SCIENTIFIQUE (CNRS), 75016 Paris (FR)
(72) Inventeur: ANDRIEUX, Claude, F-75020 Paris (FR); GONZALEZ, Felipe, Nezahualcoyoltl, Mexico 57000 (MX); PINSON, Jean, F-94120 Fontenay sous Bois (FR); SAVEANT, Jean-Michel, F-75013 Paris (FR)
(74) Mandataire: Savina, Jacques
(86) Numéro de dépôt international: PCT/FR1998/000437
(87) Numéro de publication internationale: WO 1998/040540

(56) Documents cités:
- EP-A- 0 374 680
- WO-A-96/18688
- DE-A- 1 143 951
- US-A- 4 844 781
- Angew. Chem. 93, 1989, pages 978 and 986

## Description

La présente invention est relative à un procédé de réalisation par voie électrochimique d'un matériau carboné dont la surface est modifiée par des groupes organiques notamment fonctionnalisés.

Elle concerne également un nouveau matériau carboné dont la surface est modifiée par des groupes organiques notamment fonctionnalisés et diverses applications de ce matériau carboné.

La modification de surface des fibres de carbone constitue une solution bien connue pour améliorer les propriétés mécaniques des matériaux composites. Certains matériaux composites sont formés d'une matrice de résine organique renforcée par des fibres de carbone. On sait que les propriétés mécaniques de ces matériaux dépendent, au moins en partie, de la contrainte de cisaillement. La contrainte de cisaillement sera d'autant plus élevée que la force de cohésion laminaire sera plus forte, c'est-à-dire que l'adhérence fibres/matrice sera plus élevée. La modification de surface des fibres de carbone permet de créer des groupes à la surface améliorants l'affinité (ou l'adhérence) de celles-ci pour la matrice.

Dans la plupart de ces procédés, on améliore l'adhérence fibres/matrice en traitant la surface des fibres de carbone par voie chimique ou électrochimique.

Les méthodes usuelles pour modifier la surface des matériaux carbonés font intervenir des procédés vigoureux d'oxydation conduisant à la formation de groupes carboxylique, quinonique, cétonique ou hydroxyle qui peuvent ensuite être couplés à des substrats, notamment les matrices organiques.

D'autres procédés par voie électrochimique permettent de fixer sur la fibre des composés aminés.

Le document FR-A-2 477 593 décrit un procédé consistant à traiter électrochimiquement les fibres dans une solution d'un sulfate ou bisulfate d'ammonium, ce qui conduit à former sur la surface des fibres des groupes tels que -NH₂ et =NH et à améliorer de ce fait l'adhérence fibres/matrice.

Les documents FR-A-2 564 489 et FR-A-2 607 528 décrivent des procédés électrochimiques dans lesquels on greffe des groupes azotés sur les fibres de carbone, par exemple par oxydation d'une solution aqueuse d'un composé aminé.

Le document JP-A- 59 82467 décrit le traitement électrochimique de fibres de carbone par réduction cathodique de composés aminés en milieu aqueux

Le procédé décrit dans le brevet EP-B-569 503 permet defixersur la surface d'un matériau carboné un groupe aromatique par réduction électrochimique d'un sel de diazonium de formule ArN₂X en mettant en contact le matériau carboné avec une solution de sel de diazonium dans un solvant aprotique et en polarisant négativement le matériau carboné par rapport à une anode également en contact avec la solution de sel de diazonium. Il en résulte l'attachement des groupes aromatiques par une liaison carbone (du matériau carboné)-carbone aromatique (du radical Ar).

Outre les applications de ces matériaux carbonés modifiés pour la réalisation de matériaux composites fibres/matrice, lesdits matériaux carbonés modifiés peuvent être utilisés pour greffer des composés complexants, des molécules biologiques ou d'autres groupes organiques.

II est néanmoins souhaitable de proposer d'autres procédés de traitement de surface de matériaux carbonés qui permettront d'accéder à de nouveaux matériaux carbonés modifiés dont les propriétés pourront varier ou même être améliorées pat rapport aux propriétés des matériaux déjà existants, et avec une diversité de molécules greffées plus importante.

L'objet de la présente invention est de proposer une solution a ces problèmes.

L'invention concerne en premier lieu un procédé de réalisation par voie électrochimique d'un matériau carboné dont la surface est modifiée par des groupes notamment fonctionnalisés, caractérisé en ce qu'il comprend la mise en contact dudit matériau carboné avec une solution dans un solvant protique ou aprotique, d'un sel d'un carboxylate d'un reste organique notamment fonctionnalisé (R) susceptible de subir la réaction de Kolbe, contenant éventuellement un électrolyte, en ce que le matériau carboné est polarisé positivement par rapport à une cathode également en contact avec la solution dudit sel, et en ce que l'on récupère le matériau carboné modifié.

On a en effet trouvé que l'oxydation anodique de carboxylates, de formule RCO₂⁻, sur des électrodes carbonées, conduisait à une fixation du reste R sur la surface carbonée. La fixation de groupes organiques est effectuée de façon covalente.

Par convention, on appellera R "reste" lorsqu'il est attaché au carboxylate et "groupe" lorsqu'il est fixé au matériau carboné. Le terme "groupe" étant plus large du fait des transformations éventuelles subséquentes.

L'oxydation électrochimique des carboxylates, encore appelée réaction de Kolbe, est l'une des plus anciennes réactions électro-organiques. Cette réaction passe par l'oxydation d'un carboxylate et provoque le transfert d'un électron sur l'électrode positive, ce qui conduit à la formation d'une molécule de dioxyde de carbone et d'un radical R. La réaction de Kolbe est en général utilisée pour produire le dimère R-R.

De façon inattendue, la demanderesse a montré que le radical R ou le carbocation qui en résulte par transfert d'un second électron peut être fixé sur un atome de carbone de la surface du matériau carboné. De façon générale la liaison matériau carboné-groupe organique est une liaison carbone-carbone entre un carbone du matériau carboné et le carbone du méthyle du groupe arylméthyle notamment fonctionnalisé fondamentalement différente de la liaison obtenue par le procédé selon le brevet EP-569 503.

L'invention concerne en particulier un procédé caractérisé en ce que le sel d'un carboxylate d'un reste organique notamment fonctionnalisé (R) susceptible de subir la réaction de Kolbe répond à la formule (I) :

R₁R₂R₃CCO₂⁻M⁺ (I)

dans laquelle :
R₁, R₂, R₃ identiques ou différents, sont choisis parmi
   - l'atome d'hydrogène,
   - les radicaux hydrocarbonés aliphatiques, linéaires ou ramifiés, comportant éventuellement une ou plusieurs double (s) liaison(s), une ou plusieurs triple(s) liaison(s), un ou plusieurs hétéroatome(s), un ou plusieurs radicaux aromatique(s), éventuellement fonctionnalisé(s),
   - les radicaux aromatiques ou hétéroaromatiques, éventuellement fonctionnalisés,

   au moins un des radicaux R₁, R₂, R₃ étant un radical aromatique ou hétéroaromatique, éventuellement fonctionnalisé,
   M⁺ est un cation, notamment du type ammonium quaternaire.

Le type de cation dépend notamment du solvant utilisé dans le cas de l'eau, ou d'un solvant protique, par exemple, le cation peut être un cation alcalin.

De préférence, le sel de formule I comprend au moins un radical aromatique ou hétéroaromatique fonctionnalisé.

De préférence R₁, R₂ correspondent à l'atome d'hydrogène.

Le terme "fonctionnalisé" signifie que les radicaux aromatiques ou hétéroaromatiques ou éventuellement aliphatiques comportent un ou plusieurs substituant(s) susceptible(s) de réagir avec un substrat ou un ou plusieurs substituant(s) pouvant être transformés en substituants susceptibles de réagir avec un substrat.

Ces substituants peuvent donc être très divers selon les applications auxquelles sont destinés les matériaux carbonés.
Parmi les substituants susceptibles de réagir directement avec une résine, notamment organique, on peut citer à titre d'exemple les groupes -NH₂, -CH=CH₂, -CF=CF₂.

Parmi les substituants précurseurs qui, après transformation sont susceptibles de réagir avec une résine, notamment organique, on peut citer à titre d'exemple les groupes NO₂, COHal, COOH, CN, Hal représentant un atome d'halogène.

Parmi les substituants susceptibles de réagir directement avec une molécule biologique, on peut citer à titre d'exemple les groupes COOH, NH₂.

Parmi les substituants précurseurs qui, après transformation, sont susceptibles de réagir avec une molécule biologique, on peut citer à titre d'exemple les groupes NO₂, COHal, CONH₂, COOH, COOCH₃, CN, CHO, CH₂OH, Hal représentant un atome d'halogène.

Parmi les substituants susceptibles de réagir directement avec des molécules organiques fonctionnelles, on peut citer les groupes NO₂, COHal, CONH₂, COOH, COOCH₃, CN, CHO, CH₂OH, Hal représentant un atome d'halogène.

Parmi les substituants précurseurs qui, après transformation, sont susceptibles de réagir avec des molécules organiques fonctionnelles, on peut citer les groupes NO₂, COHal, CONH₂, COOH, COOCH₃, CN, CHO, CH₂OH, Hal représentant un atome d'halogène.

Outre les substituants fonctionnels, les radicaux aromatiques ou hétéroaromatiques peuvent comporter un ou plusieurs substituants non réactifs tels que des radicaux alkyle de 1 à 20 atomes de carbone.

Par radicaux aliphatiques, on entend notamment les radicaux linéaires ou ramifiés comportant 1 à 20 atomes de carbone, comportant éventuellement un ou plusieurs hétéroatome(s) et éventuellement une ou plusieurs double(s) ou triple(s) liaison(s). Ces radicaux aliphatiques peuvent également comporter un ou plusieurs atome(s) d'halogène. Par extension les radicaux aliphatiques comprennent également les radicaux cycloaliphatiques.

Les atomes d'halogène peuvent par exemple être choisis parmi le chlore, le brome, le fluor, ou l'iode.

Par radicaux aromatiques, on entend tous les radicaux comportant un ou plusieurs noyaux benzéniques condensés ou indépendants bien connus. A titre non limitatif on cite les noyaux phényle, naphtyle, les noyaux tricondensés, les noyaux biphényles.

Parmi les radicaux hétéroaromatiques on cite tous les hétérocycles aromatiques comportant un ou plusieurs hétéroatomes tels que N, O, S, P.

En fait, on comprend que l'invention n'est pas limitée à des composés particuliers, pourvu qu'ils répondent à la condition de ne pas être incompatibles avec la réaction de Kolbe. Une autre condition nécessaire pour assurer le bon déroulement de la réaction est que l'encombrement stérique du reste R, ne soit pas tel qu'il rende difficile, voire impossible, la fixation du reste R sur l'atome de carbone du matériau carboné. De ce fait, il est préférable que le carbone en alpha du radical aromatique ou hétéroaromatique soit relativement dégagé. En d'autres termes, il est préférable que le carbone en alpha du radical aromatique ou hétéroaromatique soit secondaire ou primaire et très avantageusement primaire, c'est-à-dire que R₁ et R₂ correspondent à l'atome d'hydrogène.

A titre d'exemple, on peut citer les restes suivants : benzyle (composé 1), 4-méthyl benzyle (composé 2), 4-méthoxy benzyle (composé 3), N,N'-diméthyl-4-amino benzyle (composé 4), 3,4,5-triméthoxy benzyle (composé 5), 4-nitro benzyle (composé 6), naphtylméthyle (composé 7), (9-méthylanthryl) méthyle (composé 8), diphénylméthyle (composé 9), triphényl méthyle (composé 10), 4-bromométhyl benzyle (composé 11) dont les formules sont indiquées ci-après :

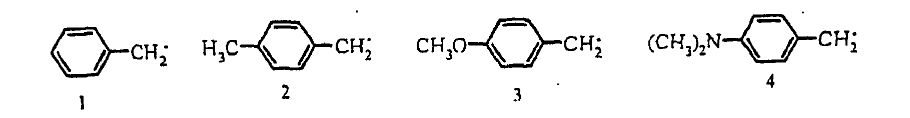

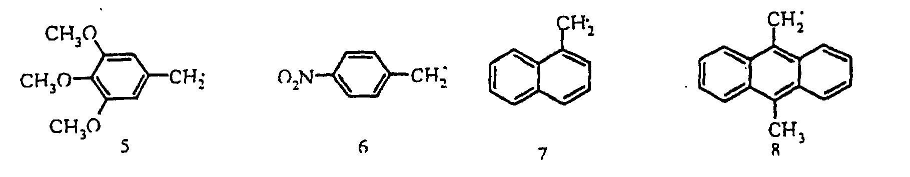

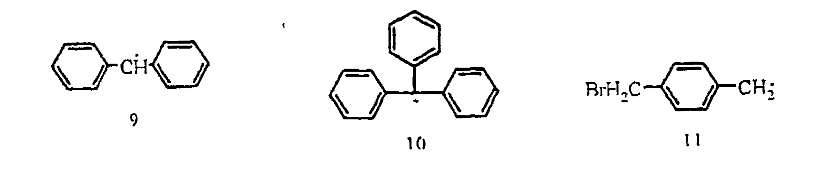

L'électrode positive constituée par le matériau carboné doit être à une valeur de potentiel anodique telle qu'elle puisse arracher un électron du carboxylate.

Cette valeur peut être mesurée par rapport à une électrode de référence et on comprend donc que cette valeur de différence de potentiel variera selon les carboxylates.

On donne ci-après les valeurs de potentiel d'oxydation par rapport à l'électrode de référence au calomel saturé (ECS) pour les composés précités:

| | | |
|---|---|---|
| 1 | 0,98₆ | V/ECS |
| 2 | 0,93₅ | V/ECS |
| 3 | 0,82₅ | V/ECS |
| 4 | 0,30₈ | V/ECS |
| 5 | 0,78₀ | V/ECS |
| 6 | 1,16₃ | V/ECS |
| 7 | 0,88₅ | V/ECS |
| 8 | 0,41₀ | V/ECS |
| 9 | 0,91₈ | V/ECS |
| 10 | 0,73₀ | V/ECS |
| 11 | 1,32 | V/ECS |

En pratique, selon un procédé avantageux, l'oxydation anodique des ions carboxylates est assurée par voltamétrie cyclique répétitive dans un intervalle de potentiel où ils sont oxydés, ou par électrolyse à potentiel controllé (au potentiel où ils sont oxydés) ou par électrolyse à intensité controllée avec un courant choisi selon les techniques classiques de l'homme de l'art.

Parmi les solvants polaires aprotiques, on peut citer à titre d'exemple l'acétonitrile, le benzonitrile, le butyronitrile, le dichlorométhane, le 1,2-dichloroéthane, le diméthylformamide, le diméthylsulfoxyde, le diméthylacétamide, le carbonate de propylène, le sulfolane ou leurs mélanges.

Parmi les solvants protiques, on peut citer à titre d'exemple l'eau, le méthanol, l'éthanol ou leurs mélanges.

La solution comprend également un électrolyte, selon un mode de réalisation préféré, tel que les sels d'ammonium quaternaires ou les sels de métal alcalin.

Parmi ceux-ci, on cite les tétrafluoroborates, perchlorates et hexafluorophosphates alcalins ou d'ammonium quaternaire, en particulier le tétrafluoroborate de lithium, un tétrafluoroborate de tétralkylammonium comme le tétrafluoroborate de tétrabutylammonium, ou l'hexafluorophosphate de tétrabutylammonium.

Les concentrations en carboxylate et en électrolyte sont généralement comprises entre 10⁻³ et 10⁻¹ mol/l pour le carboxylate et de 10⁻² et 1 mol /l pour l'électrolyte.

Si l'on désire un film très compact, une variante avantageuse consiste à effectuer le procédé en deux étapes.

La première étape consiste à oxyder le carboxylate à son potentiel d'oxydation. Cependant, après que cette oxydation ait conduit à la passivation de l'électrode carbonée, ce qui indique que la fixation du reste R est achevée, on a noté l'existence dans une solution de carboxylate d'un potentiel d'oxydation, situé entre le potentiel d'oxydation du carboxylate initial et le potentiel d'oxydation du reste R qui est observé lors du transfert de l'électrode carbonée modifiée dans une solution d'électrolyte pur.

L'oxydation anodique des ions carboxylates dans une solution d'électrolytes et des ions carboxylates en contact avec cette électrode modifiée à ce nouveau potentiel d'oxydation conduit à la fixation de restes R supplémentaires sur l'électrode carbonée.

De ce fait, selon cette variante préférée l'électrode carbonée modifiée selon la première étape est à nouveau soumise à une polarisation anodique au potentiel d'oxydation approprié, ce qui conduit a une nouvelle passivation de l'électrode carbonée par fixation de restes R supplémentaires. Cela permet d'obtenir un film de surface de restes R beaucoup plus dense.

Cette seconde oxydation est également effectuée, de préférence par voltamétrie cyclique répétitive, dans l'intervalle de potentiel requis, ou par électrolyse à potentiel controllé (au potentiel où ils sont oxydés) ou par électrolyse à intensité controllée avec un courant choisi selon les techniques classiques de l'homme de l'art.

Sans que l'invention soit d'une quelconque manière liée à une explication scientifique, les inventeurs pensent que, après la première étape, la surface du matériau carboné contient encore certains sites où un transfert d'électrons peut encore se produire. Ces sites sont bloqués par des ions carboxylates. Les restes R déjà fixés pourraient induire une diminution significative de la constante diélectrique locale provoquant ainsi une attraction électrostatique forte entre les ions carboxylates et la surface chargée de l'électrode.

Ce serait la raison pour laquelle un second potentiel plus positif conduit à une fixation supplémentaire de restes R.

Les matériaux carbonés modifiés sont récupérés et leur caractérisation peut être faite de plusieurs manières.

On cite la voltamétrie cyclique, la spectroscopie photoélectronique de rayons X et la microscopie à effet tunnel.

Les mesures effectuées confirment la fixation des restes R sur la surface carbonée. La densité surfacique des restes R dépend de l'encombrement stérique de ceux-ci et variera donc selon les restes R considérés. On donne dans les exemples les densités surfaciques des restes R pour les matériaux carbonés modifiés en mettant en oeuvre le procédé selon l'invention avec les carboxylates n° 6, 7 et 8.

Selon une autre variante, les matériaux conducteurs carbonés dont la surface a été modifiée par le procédé selon l'invention sont soumis à une transformation subséquente des substituants fonctionnels Par exemple, les substituants pourront être transformés pour réagir avec une résine, une molécule biologique, une molécule organique fonctionnelle.

L'invention s'étend donc aux matériaux carbonés transformés suite au procédé selon l'invention.

L'invention concerne également les matériaux carbonés susceptibles d'être obtenus par le procédé selon l'invention.

Les matériaux carbonés modifiés, notamment de noir de carbone, de graphite pyrrolitique hautement orienté (HOPG) ou de carbone vitreux, se présentent selon une variante sous forme de fibres, de poudres, de feutre, de tissu, de billes, ou de composites carbone-carbone.

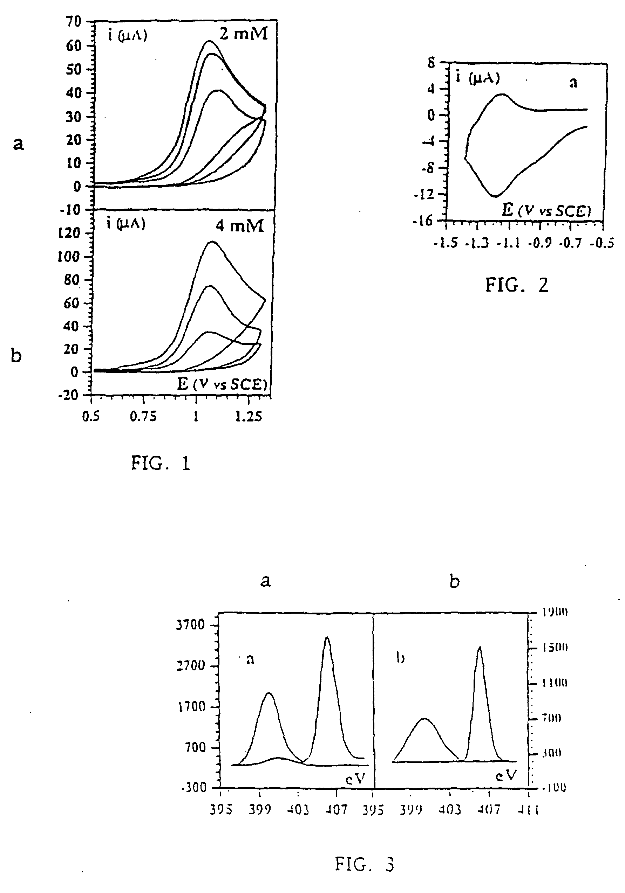

Le procédé selon l'invention peut être mis en oeuvre à l'aide d'une cellule d'électrolyse connue telle que celle qui est décrite dans le brevet EP-B-569 503, figure 1 et description page 8, lignes 12 à 25 dont le contenu est incorporé par référence.

L'invention concerne également les matériaux carbonés dont la surface est modifiée par des groupes R de formule (II) :

R₁R₂R₃C (II)

dans laquelle :
R₁, R₂, R₃ identiques ou différents, sont choisis parmi :
   - l'atome d'hydrogène,
   - les radicaux hydrocarbonés aliphatiques, linéaires ou ramifiés, comportant éventuellement une ou plusieurs double (s) liaison(s), une ou plusieurs triple(s) liaison(s), un ou plusieurs hétéroatome(s), un ou plusieurs radicaux aromatiques, éventuellement fonctionnalisés, les radicaux aromatiques ou hétéroaromatiques, éventuellement fonctionnalisés,

   au moins un des radicaux R₁, R₂, R₃ étant un radical aromatique ou hétéroaromatique, éventuellement fonctionnalisé.

La description des restes R indiquée dans la description du procédé s'applique à la description des groupes R fixés sur le matériau carboné.

Il est préférable que le carbone en alpha du radical aromatique ou hétéroaromatique soit secondaire ou primaire et très avantageusement primaire, c'est-à-dire que R₁ et R₂ correspondent à l'atome d'hydrogène.

A titre d'exemple on cite les groupes suivants : Benzyle, 4-méthyl benzyle, 4-méthoxy benzyle, N,N'-diméthyl-4-amino benzyle, 3,4,5-triméthoxy benzyle, 4-nitro benzyle, naphtylméthyle, (9-méthylanthracyl)méthyle, diphénylméthyle, triphénylméthyle, 4-bromométhyl benzyle.

L'invention concerne également les fibres de carbone modifiées et les poudres de carbone modifiées, à base du matériau carboné selon l'invention.

De préférence, ces fibres modifiées comportent des substituants susceptibles de réagir de façon covalente avec des radicaux présents sur une résine organique destinée à être associée aux dites fibres sous forme de matériaux composites. Parmi les substituants susceptibles de réagir directement avec une résine, notamment organique, on cite à titre d'exemple les groupes NH₂, -CH=CH₂,-CF=CF₂.

Parmi les substituants précurseurs qui, après transformation, sont susceptibles de réagir avec une résine, notamment organique, on cite a titre d'exemple les groupes NO₂, COHal, COOH, CN, avec Hal représentant un atome d'halogène.

Bien entendu, la nature de ces substituants est en général très variée et fonction de la résine organique considérée. L'énumération sus-indiquée n'est donc en aucune façon limitative.

L'invention concerne également les matériaux composites comportant une matrice de résine organique renforcée par des fibres de carbone modifiées selon l'invention.

La matrice d'un matériau composite peut être un polymère thermodurcissable tel qu'une résine époxy, ou une résine thermoplastique, par exemple une résine polyamide, polyéthylène ou polytétrafluoroéthylène.

L'invention concerne également des matériaux carbonés modifiés par des groupes R dont les substituants sont susceptibles de fixer de manière covalente des composés chimiques tels que des agents complexants ou des molécules biologiques, telles que des protéines et en particulier des enzymes.

Parmi les substituants susceptibles de réagir directement avec une molécule biologique, on peut citer à titre d'exemple les groupes COOH, NH₂.

Parmi les substituants précurseurs qui, après transformation, sont susceptibles de réagir avec une molécule biologique, on peut citer à titre d'exemple les groupes NO₂, COHal, CONH₂, COOH, COOCH₃, CN, CHO, CH₂OH, avec Hal représentant un atome d'halogène.

Les exemples ci-après illustrent l'invention.

Tous les exemples sont effectués dans une cellule d'électrolyse dans laquelle est introduite une solution d'électrolyte et d'un carboxylate, ladite solution présentant les caractéristiques suivantes :
Solvant : acétonitrile,
   Carboxylates : benzyle (composé 1), 4-méthyl benzyle (composé 2), 4-méthoxy benzyle (composé 3), N,N'-diméthyl-4-amino benzyle (composé 4), 3,4,5-triméthoxy benzyle (composé 5), 4-nitro benzyle (composé 6), naphtylméthyle (composé 7), (9-méthylanthryl) méthyle (composé 8), 4-bromométhyl benzyle (composé 11).

Les carboxylates étaient préparés par addition d'une quantité stoechiométrique de n-Bu₄NOH.
Electrolyte : n-Bu₄NPF₆ 0,1 M

Les expériences sont effectuées sur des électrodes de carbone vitreux (GC), sauf pour la caractérisation par microscopie électronique à effet tunnel (MET) où l'on utilisait une électrode de graphite hautement orienté (HOPG).

### EXEMPLES

### Exemple 1

Une solution du carboxylate 1 à une concentration de 2 mM ou 4 mM est soumise à une voltamétrie cyclique répétée dans l'intervalle de potentiel où les ions carboxylates sont oxydés.

La solution est agitée par bullage d'argon entre chaque cycle.

La figure 1 illustre le voltamogramme de ce carboxylate 1 pour des cycles répétés à une vitesse de balayage de 0,2 V/s.

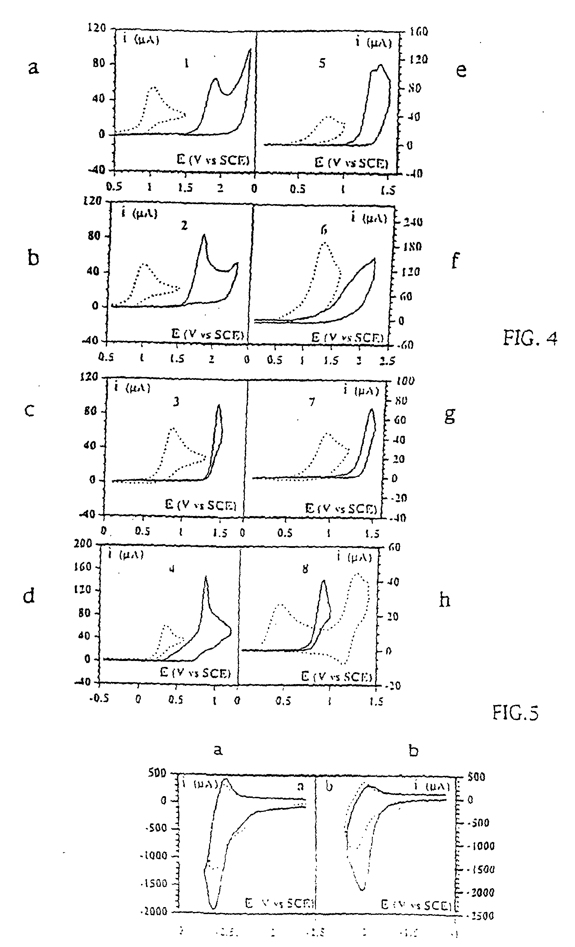

La passivation observée est d'autant plus rapide que la concentration initiale du carboxylate est élevée (figure 1 a, 2 mM; figure 1b, 4 mM).

A une concentration de 2 mM, le pic anodique disparaît après 13 cycles.

A une concentration de 4 mM, le pic anodique disparaît après 9 cycles.

Le phénomène d'inhibition est montré par la disparition du pic anodique, ce qui indique que les groupes benzyle se fixent sur le matériau carboné, provoquant la passivation de ce dernier.

### Exemple 2

Les composés 2, 3, 4, 5, 6, 7, 8 testés dans les mêmes conditions et dont la formule a été indiquée dans la description conduisent à un phénomène d'inhibition bien que le nombre de cycles requis varie selon les cas.

Pour les composés 2, 3, 5, 6 et 7, le nombre de cycles est du même ordre que pour le composé 1 pour des concentrations similaires.

Pour les composés 4 et 8, le phénomène est plus lent (environ cinquante cycles sont nécessaires).

Les pics de potentiel observés avec les différents carboxylates sont les suivants à 0,1 V/s :

| | | | | | | | | | |
|---|---|---|---|---|---|---|---|---|---|
| 1 | 2 | 3 | 4 | 5 | 6 | 7 | 8 | 9 | 10 |
| 0,98₆ | 0,93₅ | 0,82₅ | 0,30₈ | 0,78₀ | 1,16₃ | 0,88₅ | 0,41₀ | 0,91₈ | 0,73₀ |

### Caractérisation du matériau obtenu pour le carboxylate 6

### 1) par voltamétrie cyclique

La figure 2 montre la réponse en voltamétrie cyclique d'une électrode passivée par oxydation de 6 et transférée dans une solution électrolytique pure (acétonitrile + 0,1 M de n-Bu₄NPF₆), pour une vitesse de balayage de 0,2 V/s.

Une vague surfacique est observée dans la même région de potentiel qu'une solution de nitrobenzène.

### 2) par spectroscopie photoélectronique de rayons X.

La présence de groupes nitro est également révélée sur des électrodes, soit de carbone vitreux (figure 3a), soit de graphite hautement orienté (figure 3b) par le signal de l'azote du groupe nitro à 406 eV.

Par spectroscopie photoélectronique en rayons X, on a également déterminé les caractéristiques du spectre complet des électrodes de carbone vitreux (GC), de graphite hautement orienté (HOPG) ou de fibres de carbone.

Ces caractéristiques sont rassemblées dans le tableau ci-dessous.

On peut estimer approximativement la densité surfacique à 2,5.10¹⁰ mole/cm².

| Electrode | %C total 285-289 eV | % O total 533 eV | % NO₂ total 406 eV | % N réduit 400 eV | % CO₂H 289 eV |
|---|---|---|---|---|---|
| GC | 75,1 (90,0) | 21,1 (9,5) | 2,2 (0,0) | 1,6 (0,4) | 0,0 (0,0) |
| fibre de carbone | 70,8 (90,8) | 27,7 (8,6) | 2,3 (0,0) | 0,0 (0,0) | 0,0 (0,0) |
| HOPG | 89,3 (99,7) | 7,8 (0,3) | 1,5 (0,0) | 1,4 (0,0) | 0,0 (0,0) |

Les chiffres entre parenthèses correspondent à la surface nue.

### Caractérisation du matériau obtenu pour le carboxylate 8

Les électrodes passivées par le carboxylate 8 révèlent le même comportement en voltamétrie cyclique réductive. C'est-à-dire que la présence du groupe 9-méthylanthryle est attestée par la présence d'un signal de réduction réversible du 9-méthylanthracène, ainsi que par un signal d'oxydation légèrement réversible situé dans la même zone de potentiel que le signal d'oxydation du 9-méthylanthracène.

Une faible réversibilité du voltamogramme est observée lors du cyclage d'une électrode passivée et transférée dans une solution électrolytique pure. Cette vague est localisée dans le même intervalle de potentiel que la vague d'oxydation de la solution de 9-méthylanthracène.

Par microscopie électronique à effet tunnel on obtient la répartition suivante des restes (9-méthylanthryl) méthyle sur la surface carbonée à comparer au modèle de Dreiding dont le calcul est basé sur le rayon de rotation du reste R :

| distances (A) | MET | modèle |
|---|---|---|
| la plus courte | 15,1 | 14,9 |
| la plus longue | 22,3 | 21,2 |
| diagonale la plus courte | 24,3 | 23,7 |

On peut estimer approximativement la densité surfacique à 1,4.10¹⁰ mole/cm2.

### Caractérisation du matériau obtenu pour le carboxylate 7

Les électrodes passivées par le carboxylate 7 révèlent le même comportement en voltamétrie cyclique réductive que les électrodes exemplifiées précédemment. Cependant le voltamogramme de cyclage oxydatif ne révèle pas de réversibilité.

Le voltamogramme cyclique en réduction est moins réversible que dans le cas de 8 à 0,2 V/s mais la réversibilité peut être restaurée par augmentation de la vitesse de balayage à 20 V/s.

Par microscopie à effet tunnel on obtient la répartition suivante des restes naphtylméthyle sur la surface carbonée à comparer au modèle Dreiding dont le calcul est basé sur le rayon de rotation du reste :

| distances (A) | MET | modèle |
|---|---|---|
| la plus courte | 14,5 | 14,6 |
| la plus longue | 19,5 | 18,6 |
| diagonale la plus courte | 25,2 | 23,0 |

On peut estimer approximativement la densité surfacique à 1,5 10⁻¹⁰ mole/cm².

### Caractérisation des matériaux obtenus pour les carboxylates 1, 2, 3 et 5

La présence des groupes correspondants à la surface de matériaux est attestée en voltamétrie cyclique par des vagues irréversibles d'oxydation localisées dans le même intervalle de potentiel que la solution des hydrocarbures correspondants.

### Caractérisation du matériau obtenu pour le carboxylate 4

La voltamétrie cyclique de l'électrode passivée par le carboxylate 4 dans une solution électrolytique pure révèle une vague d'oxydation dans le même intervalle de potentiel que la vague d'oxydation de la solution de N, N'-diméthylaniline. A faible vitesse de balayage (0,2 V/s) la vague est irréversible, à vitesse de balayage plus élevée (20 V/s) la vague devient réversible.

### Exemple 3

### Procédé d'oxydation supplémentaire

L'électrode de carbone vitreux obtenue avec le carboxylate 1 selon l'exemple 1 est soumise à une voltamétrie cyclique à 0,2 V/s dans une solution à 2 mM de carboxylate 1 dans l'acétonitrile + 0,1 M n-Bu₄NPF₆ et présente une vague d'oxydation plus positive que la vague d'oxydation du carboxylate (comme indiqué à la figure 4a, les lignes en pointillé représentant l'oxydation initiale du carboxylate). Selon cette expérience, on accroîtle nombre de restes benzyle fixés sur l'électrode carbonée.

### Exemple 4

### Procédé d'oxydation supplémentaire

L'électrode de carbone vitreux obtenue avec le carboxylate 2 est soumise à une voltamétrie cyclique à 0,2 V/s dans une solution à 2 mM de carboxylate 2 et présente une vague d'oxydation plus positive que la vague d'oxydation du carboxylate (comme indiqué à la figure 4b, les lignes en pointillé représentant l'oxydation initiale du carboxylate). Selon cette expérience on accroît le nombre de restes méthyl-4 benzyle fixés sur l'électrode carbonée.

### Exemple 5

### Procédé d'oxydation supplémentaire

L'électrode de carbone vitreux obtenue avec le carboxylate 3 est soumise à une voltamétrie cyclique à 0,2 V/s dans une solution à 2 mM de carboxylate 3 et présente une vague d'oxydation plus positive que la vague d'oxydation du carboxylate (comme indiqué à la figure 4c, les lignes en pointillé représentant l'oxydation initiale du carboxylate). Selon cette expérience on accroît le nombre de restes méthoxy-4 benzyle fixés sur l'électrode carbonée.

### Exemple 6

### Procédé d'oxydation supplémentaire

L'électrode de carbone vitreux obtenue avec le carboxylate 4 est soumise à une voltamétrie cyclique à 0,2 V/s dans une solution à 2 mM decarboxylate 4 et présente une vague d'oxydation plus positive que la vague d'oxydation du carboxylate (comme indiqué à la figure 4d, les lignes en pointillé représentant l'oxydation initiale du carboxylate). Selon cette expérience on accroît le nombre de restes N,N'-diméthylaminobenzyle fixés sur l'électrode carbonée.

### Exemple 7

### Procédé d'oxydation supplémentaire

L'électrode de carbone vitreux obtenue avec le carboxylate 5 est soumise à une voltamétrie cyclique à 0,2 V/s dans une solution à 2 mM de carboxylate 5 et présente une vague d'oxydation plus positive que la vague d'oxydation du carboxylate (comme indiqué à la figure 4e, les lignes en pointillé représentant l'oxydation initiale du carboxylate). Selon cette expérience on accroît le nombre de restes triméthoxy 3, 4 5 benzyle fixés sur l'électrode carbonée.

### Exemple 8

### Procédé d'oxydation supplémentaire

L'électrode de carbone vitreux obtenue avec le carboxylate 6 est soumise à une voltamétrie cyclique à 0,2 V/s dans une solution à 5 mM de carboxylate 6 et présente une vague d'oxydation plus positive que la vague d'oxydation du carboxylate (comme indiqué à la figure 4f, les lignes en pointillé représentant l'oxydation initiale du carboxylate). Selon cette expérience on accroît le nombre de restes nitro-4 benzyle fixés sur l'électrode carbonée.

### Exemple 9

### Procédé d'oxydation supplémentaire

L'électrode de carbone vitreux obtenue avec le carboxylate 7 est soumise à une voltamétrie cyclique à 0,2 V/s dans une solution à 2 mM de carboxylate 7 et présente une vague d'oxydation plus positive que la vague d'oxydation du carboxylate (comme indiqué à la figure 4g, les lignes en pointillé représentant l'oxydation initiale du carboxylate). Selon cette expérience on accroît le nombre de restes naphtylméthyle fixés sur l'électrode carbonée.

### Exemple 10

### Procédé d'oxydation supplémentaire

L'électrode de carbone vitreux obtenue avec le carboxylate 8 est soumise à une voltamétrie cyclique à 0,2 V/s dans une solution a 1 mM de carboxylate 8 et présente une vague d'oxydation plus positive que la vague d'oxydation du carboxylate (comme indique à la figure 4h, les lignes en pointillé représentant l'oxydation initiale du carboxylate). Selon cette expérience on accroît le nombre de restes (9-méthylanthryl)méthyl fixés sur l'électrode carbonée.

### Caractérisation des matériaux obtenus pour les carboxylates 7 et 8 selon les exemples 9 et 10

La voltamétrie cyclique à une vitesse de balayage de 20 V/s des électrodes passivées par les carboxylates 7 et 8 dans une solution électrolytique pure révèle des courbes réversibles localisées dans le même intervalle de potentiel que les solutions des hydrocarbures correspondants (lignes en pointillé des figures 5a et 5b).

### Caractérisation des matériaux carbonés modifiés selon les exemples 9 et 10 par microscopie à effet tunnel

Les mesures sont indiquées dans le tableau ci-dessous :
Pour le matériau carboné avec reste 7

| distances (A) | MET | modèle |
|---|---|---|
| la plus courte | 8,2 | 8,4 |
| la plus longue | 11,0 | 11,1 |
| diagonale la plus courte | 12,2 | 12,6 |

Pour le matériau carboné avec reste 8 :

| distances (A) | MET | modèle |
|---|---|---|
| la plus courte | 8,0 | 8,4 |
| la plus longue | 11,1 | 10,5 |
| diagonale la plus courte | 11,2 | 10,4 |

On constate que la densité surfacique est au moins cinq fois celle obtenue avec la première oxydation.

On constate donc que des matériaux carbonés modifiés très divers peuvent être obtenus par le procédé selon l'invention et que ces matériaux peuvent donner lieu à de nombreuses applications du fait de la diversité des groupes greffés et de la nature conductrice des supports carbonés.

### Exemple 11

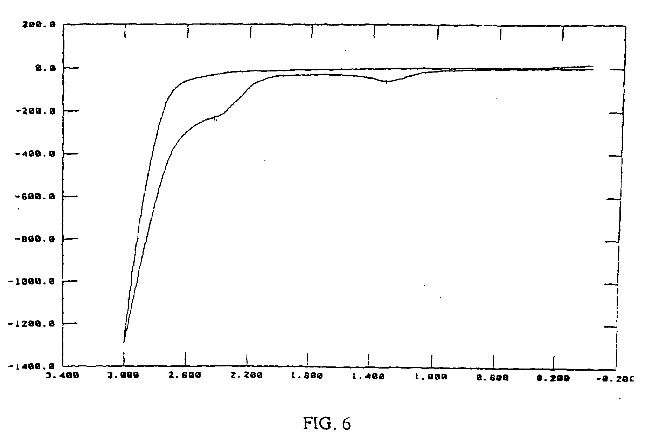

La figure 6 représente le voltamogramme du carboxylate 11 à 2,29 mM dans une solution d'acétonitrile et de 0,1 M de NBu₄PF₆, l'électrode étant du carbone vitreux, pour une vitesse de balayage de 0,2 V/s. Le carboxylate 11 présente deux vagues irréversibles vers 1,1-1,3 V/ECS et 2,4 V/ECS.

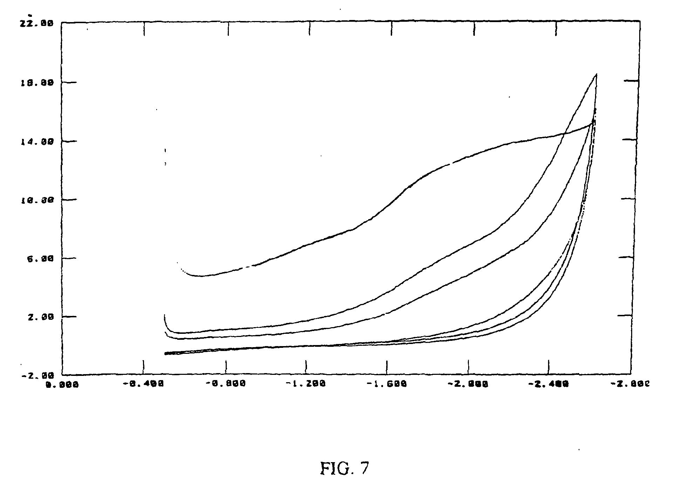

Lors de balayages successifs sur la première vague, on observe un déplacement du pic anodique vers les potentiels positifs. Par exemple, le pic se décale de 120 mV en huit balayages. Une électrolyse du carboxylate 11 est effectuée à 1,2 V/ECS pendant 15 minutes sur l'électrode de carbone vitreux. A la fin de cette électrolyse, l'électrode est soigneusement rincée dans une cuve à ultrasons dans l'acétone puis l'alcool pendant 5 minutes (dans chaque solvant), et enfin transférée dans une solution ne contenant que le solvant et l'électrolyte support. On observe sur la figure 7 (représentant le voltamogramme d'une électrode de carbone vitreux greffé par des groupes de carboxylate 11 dans l'acétonitrile et 0,1 M de NBu₄BF₄, pour une vitesse de défilement de 0,2 V/s) une vague cathodique irréversible très large située vers -2,0 V/ECS. Le potentiel de cette vague est proche de celui du bromure de benzyle dans les mêmes conditions (-1,94 V/ECS). Lors d'un deuxième balayage, cette vague disparaît.

En conclusion, on observe bien le greffage du carboxylate 11 sur le carbone vitreux. Le taux de greffage sur carbone vitreux a été mesuré à partir de la surface de la vague de réduction biélectronique correspondant à la coupure de la liaison C-Br de la surface greffée. La valeur trouvée est d'environ 6.10⁻¹⁰ moles/cm².

## Revendications

1. Procédé de réalisation parvoie électrochimique d'un matériau carboné dont lasurface est modifiée par des groupes notamment fonctionnalisés, **caractérisé en ce qu'**il comprend la mise en contact dudit matériau carboné avec une solution dans un solvant protique ou aprotique, d'un sel d'un carboxylate d'un reste organique notamment fonctionnalisé (R) susceptible de subir la réaction de Kolbe, contenant éventuellement un électrolyte, **en ce que** le matériau carboné est polarisé positivement par rapport à une cathode également en contact avec la solution dudit sel, **et en ce que** l'on récupère le matériau carboné modifié.

2. Procédé selon la revendication 1, **caractérisé en ce que** le sel d'un carboxylate d'un reste organique (R) susceptible de subir lu réaction de Kolbe répond à la formule (I):
R₁R₂R₃CCO₂⁻M⁺ (I)
dans laquelle :
R₁, R₂, R₃ identiques ou différents, sont choisis parmi
- l'atome d'hydrogène,
- les radicaux hydrocarbonés aliphatiques, linéaires ou ramifiés, comportant éventuellement une ou plusieurs double(s) liaison(s), une ou plusieurs tripie(s) liaison(s), un ou plusieurs hétéroatome(s), un ou plusieurs radicaux aromatique(s), éventuellement fonctionnalisés,
- les radicaux aromatiques ou hétéroaromatiques, éventuellement fonctionnalisés,
au moins un des radicaux R₁, R₂, R₃ étant un radical aromatique ou hétéroaromatique, éventuellement fonctionnalisé,
M⁺ est un cation.

3. Procédé selon la revendication 2, **caractérisé en ce que** le sel de formule (I) comprend au moins un radical aromatique ou hétéroaromatique fonctionnalisé.

4. Procédé selon la revendication 3, **caractérisé en ce que** ledit radical aromatique ou hétéroaromatique, est fonctionnalisé par un ou plusieurs substituants susceptibles de réagir directement avec un substrat ou par un ou plusieurs substituants précurseurs qui, après transformation, sont susceptibles de réagir avec un substrat.

5. Procédé selon la revendication 4 **caractérisé en ce que** les substituants susceptibles de réagir directement avec une résine notamment organique sont choisis dans le groupe constitué par -NH₂, -CH=CH₂, -CF=CF₂.

6. Procédé selon la revendication 4 **caractérisé en ce que** les substituants précurseurs qui après transformation sont susceptibles de réagir avec une résine notamment organique sont choisis dans le groupe constitué par NO₂, COHal, COOH, CN, Hal représentant un atome d'halogène.

7. Procédé selon la revendication 4 **caractérisé en ce que** les substituants susceptibles de réagir directement avec une molécule biologique sont choisis dans le groupe constitué par COOH, NH₂.

8. Procédé selon la revendication 4 **caractérisé en ce que** les substituants susceptibles de réagir directement avec des molécules organiques fonctionnelles sont choisis dans le groupe constitué par NO₂, COHal, CONH₂, COOH, COOCH₃, CN, CHO, CH₂OH, Hal représentant un atome d'halogène.

9. Procédé selon la revendication 4 **caractérisé en ce que** les substituants précurseurs qui après transformation sont susceptibles de réagir avec une molécule biologique ou avec des molécules organiques fonctionnelles sont choisis dans le groupe constitué par NO₂, COHal, CONH₂, COOH, COOCH₃, CN, CHO, CH₂OH, Hal représentant un atome d'halogène.

10. Procédé selon l'une des revendications 1 à 9 **caractérisé en ce que** R₁, R₂ correspondent à l'atome d'hydrogène.

11. Procédé selon la revendication 1 **caractérisé en ce que** le solvant aprotique polaire est choisi dans le groupe constitué par l'acétonitrile le benzonitrile le butyronitrile le dichlorométhane, le 1, 2-dichloroéthane, le diméthylformamide, le diméthylsulfoxyde, le diméthylacétamide, le carbonate de propylène, le sulfolane ou leurs mélanges.

12. Procédé selon la revendication 1 **caractérisé en ce que** le solvant protique polaire est choisi dans le groupe constitué par l'eau, le méthanol, l'éthanol ou leurs mélanges.

13. Procédé selon la revendication 1 **caractérisé en ce que** l'oxydation anodique des ions carboxylates est assurée par voltamétrie cyclique répétitive dans un intervalle de potentiel où ils sont oxydés ou par électrolyse.

14. Procédé selon la revendication 1 **caractérisé en ce que** la concentration en ions carboxylates est comprise entre 10⁻³ et 10⁻¹ mol/l.

15. Procédé selon la revendication 1 **caractérisé en ce que** la solution contient un électrolyte dont la concentration est comprise entre 10⁻² mol/l et 1 mol/l.

16. Procédé **caractérisé en ce que** l'électrode carbonée modifiée selon le procédé de l'une des revendications précédentes est mise en contact avec une solution dans un solvant aprotique ou protique d'un électrolyte et d'un sel d'un carboxylate d'un reste organique (R) est soumise à une polarisation positive au potentiel d'oxydation approprié par rapport à une cathode également en contact avec la solution dudit sel.

17. Procédé selon l'une des revendications 1 à 16, **caractérisé en ce que** les matériaux carbonés dont la surface a été modifiée sont soumis à une transformation subséquente des substituants fonctionnels.

18. Matériau composite formé d'une résine organique renforcée par des fibres, ledit matériau carboné étant modifié en surface par des groupes méthylaromatiques, éventuellement fonctionnalisés de formule (II) :
R₁R₂R₃C ((II)
Dans laquelle :
R₁, R₂, R₃ identiques ou différents, sont choisis parmi :
- l'atome d'hydrogène,
- les radicaux hydrocarbonés aliphatiques, linéaires ou ramifiés, comportant éventuellement une ou plusieurs double(s) liaison(s), une ou plusieurs triple(s) liaison(s), un ou plusieurs hétéroatomes, un ou plusieurs radicaux aromatiques, éventuellement fonctionnailisés,
- les radicaux aromatiques ou hétéroaromatiques, éventuellement fonctionnalisés,
au moins un des radicaux R₁, R₂, R₃ étant un radical aromatique ou hétéroaromatique, éventuellement fonctionnalisé.

19. Application des matériaux carbonés modifiés en surface par des groupes méthylaromatiques, éventuellement fonctionnalisés de formule (II) :
R₁R₂R₃C ((II)
Dans laquelle :
R₁, R₂, R₃ identiques ou différents, sont choisis parmi :
- l'atome d'hydrogène,
- les radicaux hydrocarbonés aliphatiques, linéaires ou ramifiés, comportant éventuellement une ou plusieurs double(s) liaison(s), une ou plusieurs triple(s) liaison(s), un ou plusieurs hétéroatomes, un ou plusieurs radicaux aromatiques, éventuellement fonctionnailisés,
- les radicaux aromatiques ou hétéroaromatiques, éventuellement fonctionnalisés,
au moins un des radicaux R₁, R₂, R₃ étant un radical aromatique ou hétéroaromatique, éventuellement fonctionnalisé, à la surface desquels sont fixés des groupes organiques fonctionnalisés susceptibles de réagir avec une molécule biologique pour la mise en oeuvre de réactions biologiques.

## Patentansprüche

1. Verfahren zur elektrochemischen Herstellung eines Kohlenstoffmaterials, dessen Oberfläche durch insbesondere funktionelle Gruppen modifiziert ist, **dadurch gekennzeichnet, daß** es das In-Kontakt-Bringen des genannten Kohlenstoffmaterials mit einer Lösung eines Carbonsäuresalzes eines insbesondere funktionalisierten organischen Restes (R), der geeignet ist, der Kolbe-Reaktion unterzogen zu werden, in einem protischen oder aprotischen Lösungsmittel umfaßt, wobei die Lösung gegebenenfalls einen Elektrolyten enthält, **dadurch**, daß das Kohlenstoffmaterial im Verhältnis zu einer ebenfalls mit der Lösung des genannten Salzes in Kontakt stehenden Kathode positiv polarisiert ist, und **dadurch**, daß man das modifizierte Kohlenstoffmaterial sammelt.

2. Verfahren nach Anspruch 1, **dadurch gekennzeichnet, daß** das Carbonsäuresalz eines organischen Restes (R), der geeignet ist, der Kolbe-Reaktion unterzogen zu werden, der Formel (I) entspricht
R₁R₂R₃CCO₂⁻ M⁺ (I)
in der
R₁, R₂, R₃, gleich oder verschieden, ausgewählt werden unter
- dem Wasserstoffatom,
- den aliphatischen, geraden oder verzweigten Kohlenwasserstoff-Resten, gegebenenfalls umfassend eine oder mehrere Doppelbindung(en), eine oder mehrere Dreifachbindung(en), ein oder mehrere Heteroatom(e), einen oder mehrere aromatische(n) Rest(e), gegebenenfalls funktionalisiert,
- den aromatischen oder heteroaromatischen Resten, gegebenenfalls funktionalisiert,
wobei mindestens einer der Reste R₁, R₂, R₃ ein aromatischer oder heteroaromatischer Rest ist, gegebenenfalls funktionalisiert;
M⁺ ein Kation darstellt.

3. Verfahren nach Anspruch 2, **dadurch gekennzeichnet, daß** das Salz der Formel (I) mindestens einen funktionalisierten aromatischen oder heteroaromatischen Rest umfaßt.

4. Verfahren nach Anspruch 3, **dadurch gekennzeichnet, daß** der aromatische oder heteroaromatische Rest durch einen oder mehrere Substituenten funktionalisiert ist, die geeignet sind, direkt mit einem Substrat zu reagieren, oder durch einen oder mehrere Substituenten-Vorläufer, die nach Umwandlung geeignet sind, mit einem Substrat zu reagieren.

5. Verfahren nach Anspruch 4, **dadurch gekennzeichnet, daß** die Substituenten, die geeignet sind, direkt mit einem insbesondere organischen Harz zu reagieren, aus der Gruppe gewählt werden, die gebildet wird durch -NH₂, -CH=CH₂, -CF=CF₂.

6. Verfahren nach Anspruch 4, **dadurch gekennzeichnet, daß** die Substituenten-Vorläufer, die nach Umwandlung geeignet sind, mit einem insbesondere organischen Harz zu reagieren, aus der Gruppe gewählt werden, die gebildet wird durch NO₂, COHal, COOH, CN, worin Hal ein Halogenatom darstellt.

7. Verfahren nach Anspruch 4, **dadurch gekennzeichnet, daß** die Substituenten, die geeignet sind, direkt mit einem biologischen Molekül zu reagieren, aus der Gruppe gewählt werden, die gebildet wird durch COOH, NH₂.

8. Verfahren nach Anspruch 4, **dadurch gekennzeichnet, daß** die Substituenten, die geeignet sind, direkt mit funktionellen organischen Molekülen zu reagieren, aus der Gruppe gewählt werden, die gebildet wird durch NO₂, COHal, CONH₂, COOH, COOCH₃, CN, CHO, CH₂OH, worin Hal ein Halogenatom darstellt.

9. Verfahren nach Anspruch 4, **dadurch gekennzeichnet, daß** die Substituenten-Vorläufer, die nach Umwandlung geeignet sind, mit einem biologischen Molekül oder mit funktionellen organischen Molekülen zu reagieren, aus der Gruppe gewählt werden, die gebildet wird durch NO₂, COHal, CONH₂, COOH, COOCH₃, CN, CHO, CH₂OH, worin Hal ein Halogenatom darstellt.

10. Verfahren nach einem der Ansprüche 1 bis 9, **dadurch gekennzeichnet, daß** R₁, R₂ dem Wasserstoffatom entsprechen.

11. Verfahren nach Anspruch 1, **dadurch gekennzeichnet, daß** das polare aprotische Lösungsmittel aus der Gruppe gewählt wird, die gebildet wird durch Acetonitril, Benzonitril, Butyronitril, Dichlormethan, 1,2-Dichlorethan, Dimethylformamid, Dimethylsulfoxid, Dimethylacetamid, Propylen-carbonat, Sulfolan oder ihre Mischungen.

12. Verfahren nach Anspruch 1, **dadurch gekennzeichnet, daß** das polare protische Lösungsmittel aus der Gruppe gewählt wird, die gebildet wird durch Wasser, Methanol, Ethanol oder ihre Mischungen.

13. Verfahren nach Anspruch 1, **dadurch gekennzeichnet, daß** die anodische Oxidation der Carboxylationen durch wiederholende zyklische Voltametrie in einem Potential-Intervall gewährleistet wird, wo sie oxidiert werden, oder durch Elektrolyse.

14. Verfahren nach Anspruch 1, **dadurch gekennzeichnet, daß** die Konzentration an Carboxylationen zwischen 10⁻³ Mol/l und 10⁻¹ Mol/l beträgt.

15. Verfahren nach Anspruch 1, **dadurch gekennzeichnet, daß** die Lösung einen Elektrolyten enthält, dessen Konzentration zwischen 10⁻² Mol/l und 1 Mol/l beträgt.

16. Verfahren, **dadurch gekennzeichnet, daß** die gemäß dem Verfahren nach einem der vorstehenden Ansprüche modifizierte Kohlenstoffelektrode mit einer Lösung eines Elektrolyten und eines Carbonsäuresalzes eines organischen Restes (R) in einem aprotischen oder protischen Lösungsmittel in Kontakt gebracht und einer positiven Polarisation auf ein im Verhältnis zu einer ebenfalls mit der Lösung des genannten Salzes in Kontakt stehenden Kathode geeignetes Oxidationspotential unterzogen wird.

17. Verfahren nach einem der Ansprüche 1 bis 16, **dadurch gekennzeichnet, daß** das Kohlenstoffmaterial, dessen Oberfläche modifiziert wurde, einer nachfolgenden Umwandlung der funktionellen Substituenten unterzogen wird.

18. Kompositmaterial, gebildet von einem durch Fasern verstärkten organischen Harz, wobei das genannte Kohlenstoffmaterial an der Oberfläche durch gegebenenfalls funktionalisierte methylaromatische Gruppen der Formel (II) modifiziert ist:
R₁R₂R₃C (II)
in der
R₁, R₂, R₃, gleich oder verschieden, ausgewählt werden unter
- dem Wasserstoffatom,
- den aliphatischen, geraden oder verzweigten Kohlenwasserstoff-Resten, gegebenenfalls umfassend eine oder mehrere Doppelbindung(en), eine oder mehrere Dreifachbindung(en), ein oder mehrere Heteroatom(e), einen oder mehrere aromatische(n) Rest(e), gegebenenfalls funktionalisiert,
- den aromatischen oder heteroaromatischen Resten, gegebenenfalls funktionalisiert,
wobei mindestens einer der Reste R₁, R₂, R₃ ein aromatischer oder heteroaromatischer Rest ist, gegebenenfalls funktionalisiert.

19. Anwendung der Kohlenstoffmaterialien, modifiziert an der Oberfläche durch gegebenenfalls funktionalisierte methylaromatische Gruppen der Formel (II):
R₁R₂R₃C (II)
in der
R₁, R₂, R₃, gleich oder verschieden, ausgewählt werden unter
- dem Wasserstoffatom,
- den aliphatischen, geraden oder verzweigten Kohlenwasserstoff-Resten, gegebenenfalls umfassend eine oder mehrere Doppelbindung(en), eine oder mehrere Dreifachbindung(en), ein oder mehrere Heteroatom(e), einen oder mehrere aromatische(n) Rest(e), gegebenenfalls funktionalisiert,
- den aromatischen oder heteroaromatischen Resten, gegebenenfalls funktionalisiert,
wobei mindestens einer der Reste R₁, R₂, R₃ ein aromatischer oder heteroaromatischer Rest ist, gegebenenfalls funktionalisiert, an der Oberfläche, von der die funktionalisierten organischen Gruppen fixiert werden, die geeignet sind, mit einem biologischen Molekül für die Durchführung von biologischen Reaktionen zu reagieren.

## Claims

1. Process for electrochemically producing a carbonaceous material with a surface modified by groups, in particular functionalized groups, **characterized in that** it comprises bringing the said carbonaceous material into contact with a solution in a protic or aprotic solvent, optionally comprising an electrolyte, of a salt of a carboxylate of an organic residue, in particular a functionalized residue, (R) capable of undergoing the Kolbe reaction, **in that** the carbonaceous material is positively polarized with respect to a cathode also in contact with the solution of the said salt, and **in that** the modified carbonaceous material is recovered.

2. Process according to Claim 1, **characterized in that** the salt of a carboxylate of an organic residue (R) capable of undergoing the Kolbe reaction corresponds to the formula (I):
R₁R₂R₃CCO₂⁻M⁺ (I)
in which:
R₁, R₂ and R₃, which are identical or different, are chosen from
- a hydrogen atom,
- linear or branched aliphatic hydrocarbon-comprising radicals optionally comprising one or more double bond(s), one or more triple bond(s), one or more heteroatom(s) or one or more optionally functionalized aromatic radical(s),
- optionally functionalized aromatic or heteroaromatic radicals,
at least one of the R₁, R₂ and R₃ radicals being an optionally functionalized aromatic or heteroaromatic radical,
M⁺ is a cation.

3. Process according to Claim 2, **characterized in that** the salt of formula (I) comprises at least one functionalized aromatic or heteroaromatic radical.

4. Process according to Claim 3, **characterized in that** the said aromatic or heteroaromatic radical is functionalized by one or more substituents capable of reacting directly with a substrate or by one or more precursor substituents which, after conversion, are capable of reacting with a substrate.

5. Process according to Claim 4, **characterized in that** the substituents capable of reacting directly with a resin, in particular an organic resin, are chosen from the group consisting of -NH₂, -CH=CH₂ and -CF=CF₂.

6. Process according to Claim 4, **characterized in that** the precursor substituents which, after conversion, are capable of reacting with a resin, in particular an organic resin, are chosen from the group consisting of NO₂, COHal, COOH and CN, Hal representing a halogen atom.

7. Process according to Claim 4, **characterized in that** the substituents capable of reacting directly with a biological molecule are chosen from the group consisting of COOH and NH₂.

8. Process according to Claim 4, **characterized in that** the substituents capable of reacting directly with functional organic molecules are chosen from the group consisting of NO₂, COHal, CONH₂, COOH, COOCH₃, CN, CHO and CH₂OH, Hal representing a halogen atom.

9. Process according to Claim 4, **characterized in that** the precursor substituents which, after conversion, are capable of reacting with a biological molecule or with functional organic molecules are chosen from the group consisting of NO₂, COHal, CONH₂, COOH, COOCH₃, CN, CHO and CH₂OH, Hal representing a halogen atom.

10. Process according to one of Claims 1 to 9, **characterized in that** R₁ and R₂ correspond to a hydrogen atom.

11. Process according to Claim 1, **characterized in that** the polar aprotic solvent is chosen from the group consisting of acetonitrile, benzonitrile, butyronitrile, dichloromethane, 1,2-dichloroethane, dimethylformamide, dimethyl sulphoxide, dimethylacetamide, propylene carbonate, sulpholane and their mixtures.

12. Process according to Claim 1, **characterized in that** the polar protic solvent is chosen from the group consisting of water, methanol, ethanol and their mixtures.

13. Process according to Claim 1, **characterized in that** the anodic oxidation of the carboxylate ions is provided by repetitive cyclic voltammetry in a potential region in which they are oxidized or by electrolysis.

14. Process according to Claim 1, **characterized in that** the concentration of carboxylate ions is between 10⁻³ and 10⁻¹ mol/l.

15. Process according to Claim 1, **characterized in that** the solution comprises an electrolyte, the concentration of which is between 10⁻² mol/l and 1 mol/l.

16. Process, **characterized in that** the modified carbonaceous electrode according to the process of one of the preceding claims is brought into contact with a solution, in an aprotic or protic solvent, of an electrolyte and of a salt of a carboxylate of an organic residue (R) and subjected to positive polarization at the appropriate oxidation potential with respect to a cathode also in contact with the solution of the said salt.

17. Process according to one of Claims 1 to 16, **characterized in that** the carbonaceous materials, the surface of which has been modified, are subjected to subsequent conversion of the functional substituents.

18. Composite material formed of an organic resin reinforced with fibres, the said carbonaceous material being modified at the surface by optionally functionalized methylaromatic groups of formula (II):
R₁R₂R₃C (II)
in which:
R₁, R₂ and R₃, which are identical or different, are chosen from:
- a hydrogen atom,
- linear or branched aliphatic hydrocarbon-comprising radicals optionally comprising one or more double bond(s), one or more triple bond(s), one or more heteroatoms or one or more optionally functionalized aromatic radicals,
- optionally functionalized aromatic or heteroaromatic radicals,
at least one of the R₁, R₂ and R₃ radicals being an optionally functionalized aromatic or heteroaromatic radical.

19. Use of carbonaceous materials modified at the surface by optionally functionalized methylaromatic groups of formula (II):
R₁R₂R₃C (II)
in which:
R₁, R₂ and R₃, which are identical or different, are chosen from:
- a hydrogen atom,
- linear or branched aliphatic hydrocarbon-comprising radicals optionally comprising one or more double bond(s), one or more triple bond(s), one or more heteroatoms or one or more optionally functionalized aromatic radicals,
- optionally functionalized aromatic or heteroaromatic radicals,
at least one of the R₁, R₂ and R₃ radicals being an optionally functionalized aromatic or heteroaromatic radical,
to the surface of which are attached functionalized organic groups capable of reacting with a biological molecule, for carrying out biological reactions.
